# EUROPÄISCHE PATENTSCHRIFT

(11) **EP 3 811 759 B1**
(45) Veröffentlichungstag und Bekanntmachung des Hinweises auf die Patenterteilung: **23.04.2025**
(21) Anmeldenummer: 20197876.4
(22) Anmeldetag: 23.09.2020
(51) Int. Cl.: A01D 34/835, A01D 34/73

(54) **MULCHGERÄT ZUR BEARBEITUNG VON AUF EINEM FELD STEHENDEN PFLANZENSTOPPELN MIT PENDELWINKELBEGRENZUNG**
MULCHING DEVICE FOR PROCESSING PLANT STUMPS ON A FIELD WITH TURNING ANGLE LIMITATION
APPAREIL DESTINÉ AU TRAITEMENT DES CHAUMES DE PLANTES POUSSANT DANS UN CHAMP À LIMITATION D'ANGLE D'OSCILLATION

(30) Priorität: 22.10.2019 DE 102019216223
(43) Veröffentlichungstag der Anmeldung: 28.04.2021
(73) Patentinhaber: Deere & Company, Moline, IL 61265 (US)
(72) Erfinder: Awater, Klaus, 68163 Mannheim (DE); Schild, Jan-Dirk, 68163 Mannheim (DE); Weitenberg, Klemens, 68163 Mannheim (DE); Hüning, Martin, 68163 Mannheim (DE)
(74) Vertreter: Holst, Sönke

(56) Entgegenhaltungen:
- EP-A1- 0 365 019
- EP-B1- 0 365 019
- US-A- 3 762 137
- US-A- 4 062 171
- US-B2- 9 010 078

## Beschreibung

Die Erfindung betrifft ein Mulchgerät zur Bearbeitung von Pflanzenstoppeln auf einem Feld gemäß dem Oberbegriff des Anspruchs 1, einen damit ausgestatteten Erntevorsatz sowie eine damit ausgestattete Erntemaschine.

### Stand der Technik

Unterhalb von Erntevorsätzen zur Getreide- oder Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*)*.*

Die Mulchgeräte umfassen stumpfe oder schneidende Werkzeuge, die starr oder frei pendelnd mit einer Halterung verbunden sind, welche an einer sich zumindest näherungsweise vertikal erstreckenden Welle angebracht ist (EP 3 272 199 A1) oder durch formschlüssige Merkmale am Werkzeug und der zur Lagerung dienenden Buchse, zusätzlich zur Wirkung der Fliehkraft, in eine etwa radiale Ausrichtung vorgespannt werden (DE 10 2016 213 919 A1).

Die EP 0 365 019 A1, US 3 762 137 A und US 9 010 078 B2 zeigen Mulchgeräte mit pendelnd an einer rotierenden Halterung aufgehängten Werkzeugen, die bei rotierender Halterung durch die Fliehkraft etwa radial ausgerichtet sind und deren Drehwinkel nach vorn durch Merkmale der Halterung begrenzt wird. Bei stehender Halterung können die Werkzeuge auch gegeneinander anschlagen.

In der DE 10 2005 023 012 A1 wird eine Schneidanordnung beschrieben, die bei der Ernte von Getreide dazu dient, die nach dem Abtrennen der Ähren verbleibenden Halme zu zerkleinern und pendelnd an einer um die die Hochachse rotierenden Halterung angebrachte Schlägelmesser umfasst. Es sind Anschläge an den Messern und an der Halterung vorgesehen, die eine Drehung der Schlägelmesser in der Drehrichtung nach vorn begrenzen, um zu erreichen, dass sich die Schlägelmesser durch die Wirkung der Fliehkraft maximal in einem Anstellwinkel befinden, der gegenüber dem Radius nachläuft, um eine gewünschte Relativlage der Schneide während des Schnittes sicherzustellen.

Die US 4 062 171 A zeigt einen Rasenmäher mit an einer in Drehung versetzbaren Halterung frei pendelnd angebrachten Messern, die einen sich bei drehender Halterung von der Pendelachse nach außen erstreckenden, mit einer Schneide ausgestatten Abschnitt und einen inneren Abschnitt aufweisen, der sich bei drehender Halterung von der Pendelachse nach innen erstreckt. Bei rotierender Halterung liegen die inneren Abschnitte aneinander an. Dadurch wird ermöglicht, dass die Messer bei Anprall an ein Hindernis nach hinten ausweichen und das jeweils ausweichende Messer auch das andere Messer nach hinten dreht, um einen Anprall an das Hindernis zu vermeiden.

### Aufgabe

Bei den starr an der Halterung angebrachten Werkzeugen ist als nachteilig anzusehen, dass ein Aufprall des Werkzeugs gegen einen Fremdkörper, z.B. einen Stein, in vielen Fällen eine Beschädigung des zum Antrieb der Welle dienenden Getriebes zur Folge hat. Frei pendelnde Werkzeuge, die während des Betriebes durch die Fliehkraft gegenüber einer an der Halterung angebrachten Buchse radial ausgerichtet werden und sich gegenüber der Buchse drehen, können, z.B. beim Anprall gegen einen Maisstängel oder einen Fremdkörper in eine fortdauernde Pendelbewegung versetzt werden, die zu Verschleiß an der Buchse und am Messer führt. Diese Pendelbewegung wird bei den Anordnungen nach DE 10 2016 213 919 A1 und DE 10 2005 023 012 A1 zwar vermindert, jedoch benötigt man dafür speziell geformte Lagerungen der Messer an der Halterung oder separate Anschläge am Messer und an der Halterung.

Die vorliegende Erfindung hat sich zum Ziel gesetzt, ein gegenüber dem Stand der Technik verbessertes Mulchgerät, einen damit ausgestatteten Erntevorsatz sowie eine damit ausgestattete Erntemaschine bereitzustellen.

### Lösung

Diese Aufgabe wird erfindungsgemäß durch die Lehre der Patentansprüche 1, 5 und 6 gelöst, wobei in den weiteren Patentansprüchen Merkmale aufgeführt sind, die die Lösung in vorteilhafter Weise weiterentwickeln.

Ein Mulchgerät zur Bearbeitung von Pflanzenstoppeln auf einem Feld, insbesondere zur Anbringung an einem Erntevorsatz, umfasst eine Halterung, die mit einer Welle verbunden und durch die Welle in eine Rotationsbewegung versetzbar ist, zwei diametral gegenüberliegend an der Halterung angebrachte Werkzeuge, die durch Pendellagerungen mit parallel zur Drehachse der Welle verlaufenden Pendelachsen frei pendelnd an der Halterung gelagert sind, sowie Mittel zur Begrenzung des Pendelwinkels der Werkzeuge in der Drehrichtung der Welle auf einen maximalen Winkel, welche Mittel zusammenwirkende Bereiche der Werkzeuge umfassen.

Mit anderen Worten erfolgt die Begrenzung des Pendelwinkels der Werkzeuge, d.h. des Winkels, um den die Werkzeuge um die Pendelachse in der Drehrichtung (gegenüber der Welle und der Halterung voreilend) pendeln können, durch die Werkzeuge, die zusammenwirkende (aneinander anschlagende) Bereiche aufweisen. Auf diese Weise erreicht man die gewünschte Begrenzung des Pendelwinkels, die man zur Vermeidung des oben erwähnten Verschleißes nutzt, ohne größeren Aufwand.

Die Mittel zur Begrenzung des Pendelwinkels der Werkzeuge sind konfiguriert, den in einer bei rotierender Welle eingenommenen, maximalen Winkel der Werkzeuge in eine gegenüber einer genau radialen Ausrichtung nachlaufende Stellung zu begrenzen. Dadurch erreicht man eine Dämpfung der Pendelbewegung, denn die Werkzeuge können durch die Fliehkraft nicht in die radiale Ausrichtung gebracht werden, in der sie sich in einem lokalen Minimum der wirkenden Kräfte befinden und von der aus sie die ungewünschte Pendelbewegung durchführen können.

Die Werkzeuge umfassen einen distalen Teil, der in der bei rotierender Welle eingenommenen Stellung der Werkzeuge sich von der Pendellagerung nach außen erstreckt, und einen proximalen Teil, der sich in der bei rotierender Welle eingenommenen Stellung der Werkzeuge von der Pendellagerung nach innen erstreckt, wobei die zusammenwirkenden Bereiche an den proximalen Teilen vorgesehen sind.

Die zusammenwirkenden Bereiche umfassen einen Haken, der mit dem proximalen Teil des jeweils anderen Werkzeugs zusammenwirkt. Der Haken liegt jeweils an einer Fläche des anderen Werkzeugs an, die sich zwischen dem inneren Ende des proximalen Teils und der Pendellagerung befindet. Die Haken können eine mittige Öffnung bilden, durch die sich eine gedachte Verlängerung der Drehachse der Welle erstreckt.

Die Werkzeuge am äußeren Ende des distalen Bereichs mit Schneiden und/oder Schlagkörpern versehen sein, die einteilig mit dem übrigen Werkzeug hergestellt oder in beliebiger Weise damit verbunden sind.

Die beiden Werkzeuge können baugleich und bezüglich einer sich quer zur Längsachse der Welle erstreckende Achse zueinander um 180° gedreht sein.

Die Pendellagerungen können, zusätzlich zur Drehung der Werkzeuge um die parallel zur Drehachse der Welle verlaufenden Achse, auch eine begrenzte Pendelbewegung der Werkzeuge um eine horizontale, tangential zur Drehrichtung des Mulchers orientierte Drehachse erlauben.

### Ausführungsbeispiel

In den Zeichnungen wird ein nachfolgend näher beschriebenes Ausführungsbeispiel dargestellt. Es zeigen:
- Fig. 1: eine Seitenansicht einer Erntemaschine mit einem daran angebrachten Emtevorsatz, an dem Mulchgeräte angebracht sind,
- Fig. 2: eine perspektivische Ansicht eines Mulchgeräts von vorn und unten,
- Fig. 3: eine perspektivische Ansicht der Halterung und der Werkzeuge des Mulchgeräts,
- Fig. 4: einen Schnitt durch die Halterung und die Werkzeuge entlang der Linie 4-4 der Figur 3,
- Fig. 5: einen Schnitt gemäß Figur 4, jedoch bei stehender Halterung und aus der bei rotierender Welle eingenommenen Stellung heraus gedrehten Werkzeugen,
- Fig. 6: einen vertikalen Schnitt durch die Halterung und die Werkzeuge, und
- Fig. 7: einen vertikalen Schnitt durch die Halterung und die in vertikaler Richtung verstellten Werkzeuge.

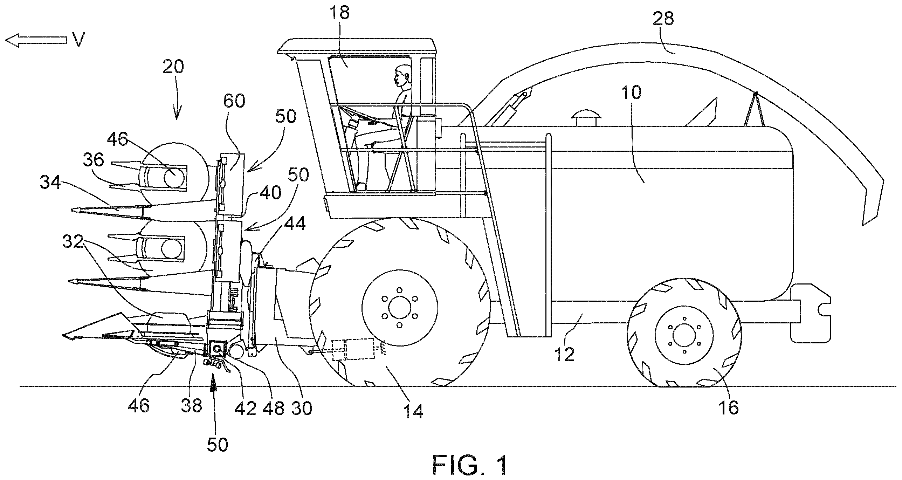

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Mais, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückem Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Emteeinsatz hydraulisch heruntergeschwenkt werden, so dass sie beim Erntebetrieb parallel zum Mittelteil 38 verlaufen. Anschließend können sie wieder hinauf geschwenkt werden. Die Figur 1 zeigt die Seitenteile 40 in hochgeschwenktem Zustand. Am Mittelteil 38 sind in der vorliegenden Ausführungsform vier Emteeinheiten 32 mit unteren Schneidscheiben zum Abschneiden der Pflanzen und oberen Förderscheiben zum Abtransport der Pflanzen angebracht, während an beiden Seitenteilen 40 jeweils zwei Ernteeinheiten 32 angebracht sind. Der Erntevorsatz 20 ist in an sich bekannter Weise mit Halmteilern 36, den Emteeinheiten 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie dem Einzugsgehäuse 30 zu, vom dem zur Häckseltrommel der Erntemaschine 10 gefördert werden.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Ernteeinheit 32 dienen. Eine Antriebswelle 48 zum Antrieb der Emteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise untergriffen werden und zur Befestigung des Erntevorsatzes 20 an der Erntemaschine 10 dienen. Er ist durch sich vertikal erstreckende Träger und Verbindungsbleche mit dem unteren Querträger 42 verbunden. Der Trägerrahmen mit den Querträgern 42, 44 und den sich vertikal erstreckenden Trägem und Verbindungsblechen bildet somit ein Skelett des Erntevorsatzes 20, das alle weiteren Elemente des Erntevorsatzes 20 trägt.

Rückwärtig jeder Ernteeinheit 32 ist jeweils ein Mulchgerät 50 angebracht. Das Mulchgerät 50 ist mit seiner Drehachse in seitlicher Richtung rückwärtig von der Drehachse der zugehörigen Emteeinheit 32 angeordnet. Dort laufen im normalen Emtebetrieb die Pflanzen ein. Falls eine Emteeinheit 32 mehrere Pflanzenreihen aberntet, können ihr mehrere Mulchgeräte 50 zugeordnet werden, deren Drehachsen rückwärtig der zu erwartenden Einlaufstellen der Pflanzenreihen angeordnet sind. Es wäre auch denkbar, die Mulchgeräte 50 lückenlos oder mit kleinen Lücken über die ganze Arbeitsbreite des Erntevorsatzes 20 zu verteilen.

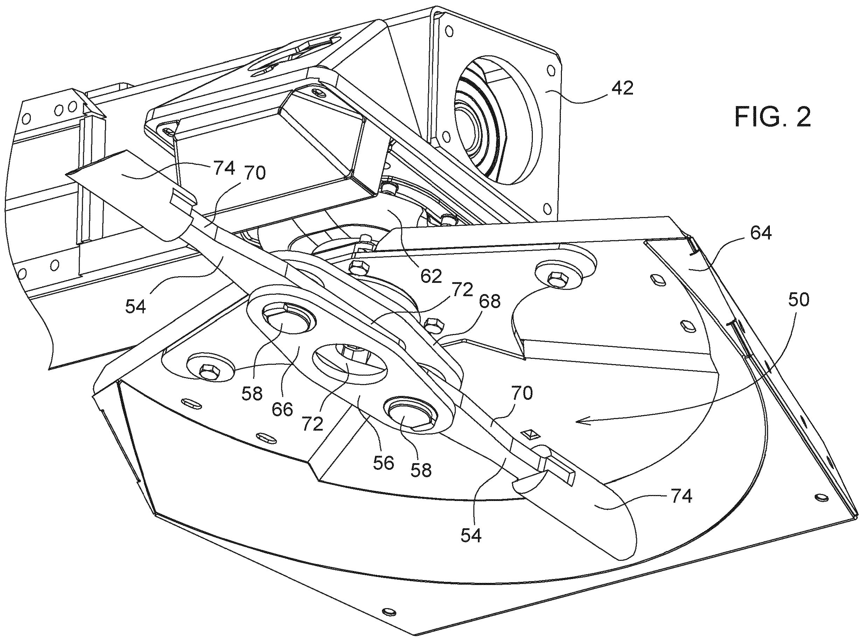

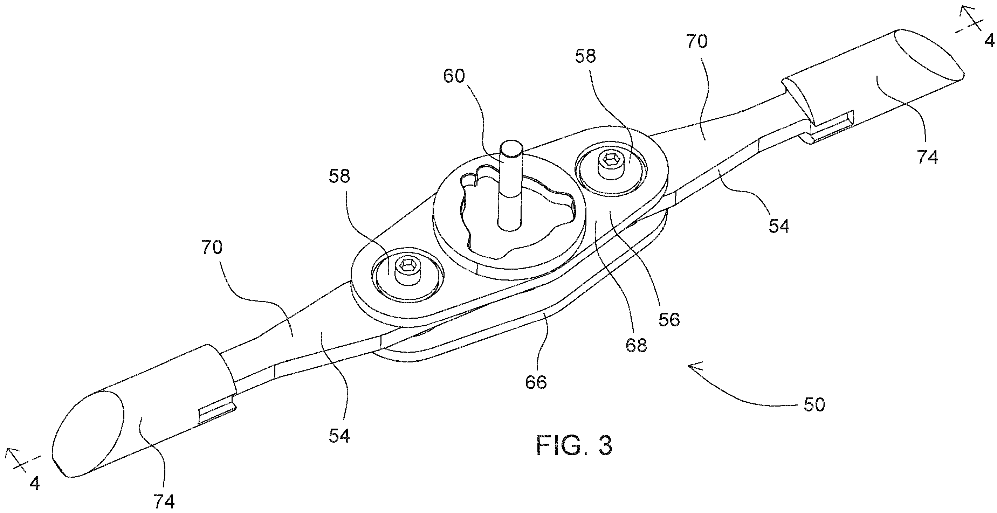

Es wird nun auf die Figur 2 verwiesen. Das Mulchgerät 50 umfasst zwei sich diametral gegenüber liegende Werkzeuge 54, die über Pendellagerungen 58 um die Hochachse pendelnd mit einer mittigen Halterung 56 verbunden sind. Die Halterung 56 ist ihrerseits mit einer Welle 60 (s. Figur 3) verbunden, deren Drehachse sich parallel zu den Achsen erstreckt, um welche die Werkzeuge durch die Pendellagerungen 58 an der Halterung 56 schwenkbar gelagert sind.

Die Welle 60 ist an ihrem unteren Ende mit der Halterung 56 verbunden und an ihrem oberen Ende mit einem Getriebe 62 antriebsverbunden, das durch die Antriebswelle 48 antreibbar ist. Die Welle 60 ist gegenüber der Antriebswelle 48 und dem unteren Querträger 42 um die Achse der Antriebswelle 48 frei schwenkbar gelagert. Eine Abdeckung 64, die das Mulchgerät nach hinten und rückwärtig der Welle 60 nach oben hin abdeckt, umschließt die Welle 60 und bewegt sich mit der Welle 60 und dem Mulchgerät 50 bodenkopierend um die Achse der Antriebswelle 48. Weitere Einzelheiten hierzu sind in der EP 3 272 199 A1 beschrieben, deren Offenbarung durch Verweis mit in die vorliegenden Unterlagen aufgenommen wird.

Die Halterung 56 umfasst einen oberen Teil 68, der mit der Welle 60 verbunden ist, sowie einen unteren Teil 66. Zwischen den beiden Teilen 66, 68 sind die Werkzeuge 54 positioniert. Die beiden Teile 66, 68 sind untereinander durch die Pendellagerungen 58 verbunden.

Die Werkzeuge 54 umfassen jeweils einen distalen Teil 70, der sich (wenn sich die Welle 60 dreht und die Werkzeuge 54 durch die Fliehkraft nach außen gezogen und nicht durch Fremdkörper beeinflusst werden) in radialer Richtung von den Pendellagerungen 58 nach außen erstreckt, und einen proximalen Teil 72, der sich (wenn sich die Welle 60 dreht und die Werkzeuge 54 durch die Fliehkraft nach außen gezogen und nicht durch Fremdkörper beeinflusst werden) von den Pendellagerungen 58 nach innen erstreckt und dessen Details und Nutzen nachfolgend erläutert werden. Am äußeren Ende des distalen Teils 70 sind Schlagkörper 74 angeordnet, die zum Zerschlagen von Pflanzenstoppeln dienen, die nach dem Abernten auf dem Feld stehen bleiben. Die Schlagkörper 74 sind als Zylinder mit nach innen und oben ansteigenden Außenkanten ausgeführt, könnten aber eine beliebige andere Form aufweisen und/oder durch Schneiden ersetzt oder ergänzt werden. Während der distale Teil 70 und der proximale Teil 72 des Werkzeugs 54 vorzugsweise einteilig hergestellt sind, können die Schlagkörper als separate Elemente hergestellt und lösbar (z.B. durch Schrauben) oder unlösbar mit dem distalen Teil 70 verbunden sein oder ebenfalls einteilig mit dem übrigen Werkzeug 54 hergestellt sein, z.B. als Fräs-, Guss- oder Schmiedeteil.

Die beiden Werkzeuge sind baugleich und im montierten Zustand bezüglich einer sich quer zur Längsachse der Welle erstreckende Achse zueinander um 180° gedreht, wie in den Figuren 3 bis 5 erkennbar ist. Man benötigt somit nicht zwei verschiedene Werkzeuge 54 für das Mulchgerät 50, was die Ersatzteilhaltung vereinfacht.

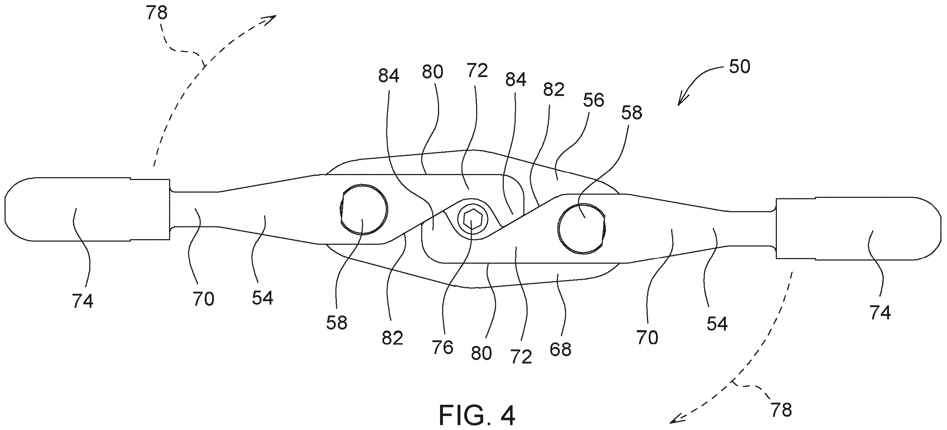

Es wird nun auf die Figur 4 verwiesen, in welcher das Mulchgerät 50 in einer Ober- oder Unteransicht gezeigt ist, um insbesondere die Form und Aufgabe der proximalen Teile 72 darzustellen. Die proximalen Teile 72 erstrecken sich von der Pendellagerung 58 ausgehend nach innen und bis über die Drehachse der Welle 60 hinaus. Dabei ist die bezüglich der Drehrichtung im normalen Betrieb, die durch die Pfeile 78 veranschaulicht wird, vorlaufende Kante 80 des proximalen Teils 72 jeweils geradlinig, während sich die nachlaufende Kante 82 nach innen verlaufend der vorlaufenden Kante 80 geradlinig annähert. Jenseits der Drehachse der Welle ist der proximale Teils 72 als Haken 84 ausgeformt, d.h. die nachlaufende Kante 82 erstreckt sich dort zunächst wieder von der vorlaufenden Kante 80 hinweg und bildet einen Anschlag, der an der nachlaufenden Kante 82 des proximalen Teil 72 des jeweils anderen Werkzeugs 54 anliegt. Die aneinander liegenden Bereiche des Hakens 84 einerseits und der nachlaufenden Kante 80 des proximalen Teils 72 des anderen Werkzeugs 54 andererseits sind parallel zueinander ausgerichtet, um eine möglichst große Anlagefläche zu erzielen.

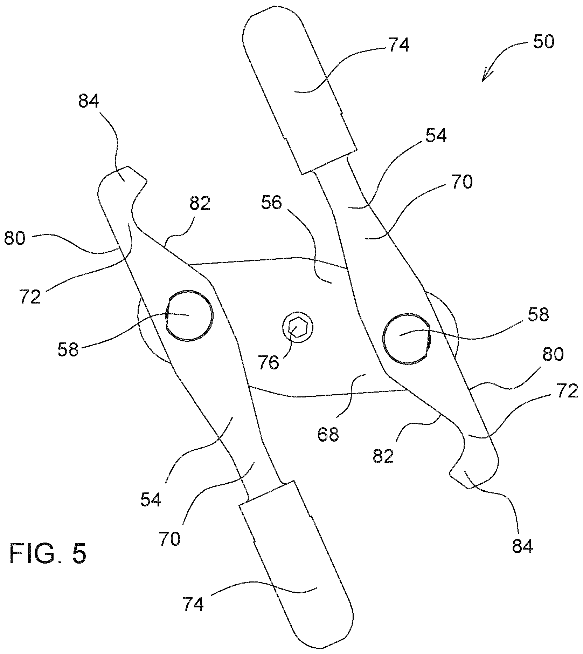

Man erhält auf diese Weise einen Anschlag zwischen den beiden proximalen Teilen 72 der beiden Werkzeuge 54, der den möglichen Winkel begrenzt, den die Werkzeuge 54 um die Pendelachsen 58 drehen können, und zwar in der vorlaufenden Richtung, wie sie durch die Pfeile 78 dargestellt ist. Die Werkzeuge 54 können sich somit nicht genau radial erstrecken, wie man anhand der Figur 4 erkennt, ohne aneinander anzuschlagen. Dadurch wird die unerwünschte Pendelbewegung der Werkzeuge 54 um die Pendelachsen 58 vermieden. Entgegen der Drehrichtung können die Werkzeuge 54 jedoch, z.B. beim Aufprall gegen einen Fremdkörper, problemlos ausweichen, wie in der Figur 5 gezeigt.

Die proximalen Teile 72 bilden in ihrer Mitte eine Aussparung, durch die eine Mutter 76 zugänglich ist, die zur Befestigung der Welle 60 an der Halterung 56 dient.

Die Werkzeuge 54 können durch formschlüssige Merkmale am Werkzeug 54 und der in der Pendellagerung 58 zur Lagerung verwendeten Buchse, zusätzlich zur Wirkung der Fliehkraft, in eine fast radiale Ausrichtung vorgespannt werden, wie in der DE 10 2016 213 919 A1 beschrieben, deren Offenbarung durch Verweis mit in die vorliegenden Unterlagen aufgenommen wird.

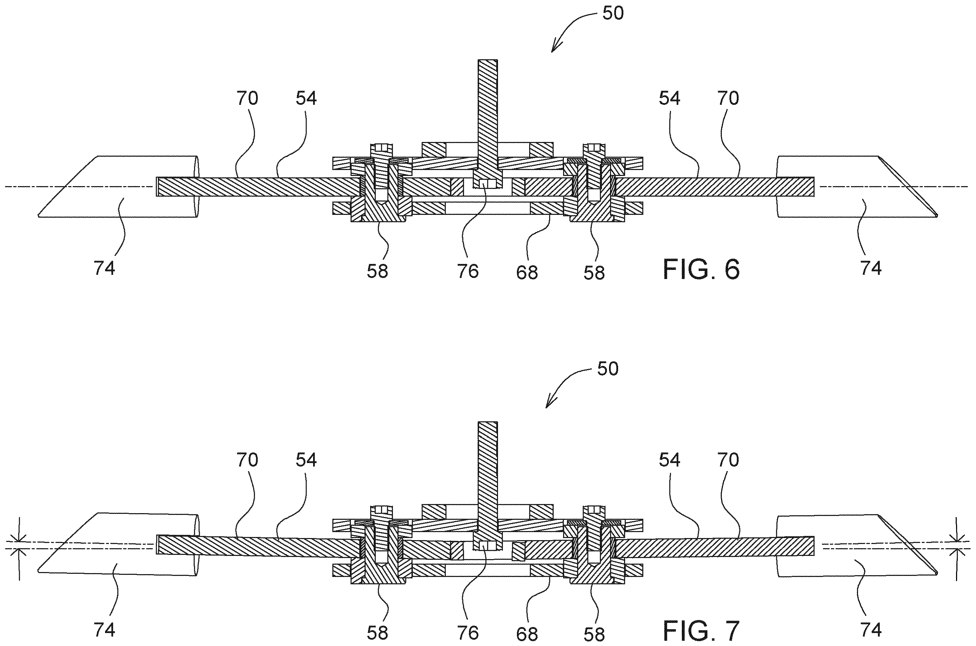

Wie in den Figuren 6 und 7 gezeigt, erlauben die Pendellagerungen 58, zusätzlich zur Drehung der Werkzeuge 54 um die parallel zur Drehachse der Welle 60 verlaufenden Achse, auch eine begrenzte Pendelbewegung der Werkzeuge um eine horizontale, tangential zur Drehrichtung des Mulchgeräts 50 orientierte Drehachse.

## Patentansprüche

1. Mulchgerät (50) zur Bearbeitung von Pflanzenstoppeln auf einem Feld, insbesondere zur Anbringung an einem Erntevorsatz (20), umfassend eine Halterung (56), die mit einer Welle (60) verbunden und durch die Welle (60) in eine Rotationsbewegung versetzbar ist, zwei diametral gegenüberliegend an der Halterung (56) angebrachte Werkzeuge (54), die durch Pendellagerungen (58) mit parallel zur Drehachse der Welle (60) verlaufenden Pendelachsen frei pendelnd an der Halterung (56) gelagert sind, sowie Mittel zur Begrenzung des sich bei rotierender Welle (60) durch die Fliehkraft ergebenden Pendelwinkels der Werkzeuge (54) in der Drehrichtung der Welle (60) auf einen maximalen Winkel, welche Mittel konfiguriert sind, den bei rotierender Welle (60) fliehkraftbedingt eingenommenen, maximalen Winkel der Werkzeuge (54) in eine gegenüber einer genau radialen Ausrichtung der Werkzeuge (54) nachlaufende Stellung zu begrenzen, wobei die Mittel zur Begrenzung des Pendelwinkels der Werkzeuge (54) Bereiche der Werkzeuge (54) umfassen, die bei rotierender Welle (60) zusammenwirken, wobei die Werkzeuge (54) einen distalen Teil (70), der sich in der bei rotierender Welle (60) eingenommenen Stellung der Werkzeuge (54) von der Pendellagerung (58) nach außen erstreckt, und einen proximalen Teil (72) umfassen, der sich in der bei rotierender Welle (60) eingenommenen Stellung der Werkzeuge (54) von der Pendellagerung nach innen erstreckt, und wobei die zusammenwirkenden Bereiche an den proximalen Teilen (70,72) vorgesehen sind, **dadurch gekennzeichnet, dass** die zusammenwirkenden Bereiche einen Haken (84) umfassen, der mit dem proximalen Teil (72) des jeweils anderen Werkzeugs (54) zusammenwirkt und dass der Haken (84) jeweils an einer Fläche des anderen Werkzeugs (54) anliegt, die sich zwischen dem inneren Ende des proximalen Teils (72) und der Pendellagerung (58) befindet.

2. Mulchgerät (50) nach Anspruch 1, wobei die Werkzeuge (54) am äußeren Ende des distalen Bereichs (70) mit Schneiden und/oder Schlagkörpem (74) versehen sind.

3. Mulchgerät (50) nach einem der vorhergehenden Ansprüche, wobei die beiden Werkzeuge (54) baugleich und bezüglich einer sich quer zur Längsachse der Welle erstreckende Achse zueinander um 180° gedreht sind.

4. Mulchgerät (50) nach einem der vorhergehenden Ansprüche, wobei die Pendellagerungen (58), zusätzlich zur Drehung der Werkzeuge (54) um die parallel zur Drehachse der Welle (60) verlaufenden Achse, auch eine begrenzte Pendelbewegung der Werkzeuge um eine horizontale, tangential zur Drehrichtung des Mulchgeräts (50) orientierte Drehachse erlauben.

5. Erntevorsatz (20) mit einem Mulchgerät (50) nach einem der vorhergehenden Ansprüche.

6. Selbstfahrende Erntemaschine (10) mit einem Erntevorsatz (20) nach Anspruch 5.

## Claims

1. Mulching apparatus (50) for processing plant stubble in a field, in particular for attaching to a harvesting header (20), comprising a mount (56), which is connected to a shaft (60) and can be set in rotary motion by the shaft (60), two tools (54), which are attached to the mount (56) diametrically opposite one another and are mounted on the mount (56) so as to swing freely by means of pendulum bearings (58) having pendulum pins running parallel to the axis of rotation of the shaft (60), and also means for limiting the pendulum angle, which arises as a result of the centrifugal force when the shaft (60) is rotating, of the tools (54) in the direction of rotation of the shaft (60) to a maximum angle, said means being configured to limit the maximum angle, which is assumed due to the centrifugal force when the shaft (60) is rotating, of the tools (54) into a trailing position in relation to an exactly radial alignment of the tools (54), wherein the means for limiting the pendulum angle of the tools (54) comprise regions of the tools (54) that interact when the shaft (60) is rotating, wherein the tools (54) comprise a distal part (70), which extends outwards from the pendulum bearing (58) in the position assumed by the tools (54) when the shaft (60) is rotating, and a proximal part (72), which extends inwards from the pendulum bearing in the position assumed by the tools (54) when the shaft (60) is rotating, and wherein the interacting regions are provided on the proximal parts (70, 72), **characterized in that** the interacting regions comprise a hook (84), which interacts with the proximal part (72) of the respective other tool (54), and **in that** the hook (84) in each case bears against a surface of the other tool (54), said surface being located between the inner end of the proximal part (72) and the pendulum bearing (58).

2. Mulching apparatus (50) according to Claim 1, wherein the tools (54) are provided with blades and/or impact bodies (74) at the outer end of the distal region (70).

3. Mulching apparatus (50) according to either of the preceding claims, wherein the two tools (54) are structurally identical and are rotated by 180° relative to one another with respect to an axis extending transversely to the longitudinal axis of the shaft.

4. Mulching apparatus (50) according to one of the preceding claims, wherein the pendulum bearings (58), in addition to rotating the tools (54) about the axis running parallel to the axis of rotation of the shaft (60), also allow a limited pendulum movement of the tools about a horizontal axis of rotation oriented tangentially to the direction of rotation of the mulching apparatus (50).

5. Harvesting header (20) having a mulching apparatus (50) according to one of the preceding claims.

6. Self-propelled harvesting machine (10) having a harvesting header (20) according to Claim 5.

## Revendications

1. Broyeur (50) permettant de traiter des chaumes dans un champ, en particulier destiné à être fixé à une tête de récolte (20), comprenant un support (56) qui est relié à un arbre (60) et peut être mis en rotation par l'arbre (60), deux outils (54) fixés de manière diamétralement opposée au support (56) et qui sont montés sur le support (56) de manière librement oscillante par des paliers articulés (58) avec des essieux oscillants s'étendant en parallèle à l'axe de rotation de l'arbre (60), ainsi que des moyens pour limiter l'angle d'oscillation des outils (54), résultant de la force centrifuge lorsque l'arbre (60) tourne, dans la direction de rotation de l'arbre (60) à un angle maximal, lesdits moyens étant configurés pour limiter l'angle maximal des outils (54), occupé en raison de la force centrifuge lorsque l'arbre (60) tourne, dans une position de chasse par rapport à un alignement radial précis des outils (54), dans lequel les moyens pour limiter l'angle d'oscillation des outils (54) comprennent des zones des outils (54) qui coopèrent lorsque l'arbre (60) tourne, dans lequel les outils (54) comprennent une partie distale (70) qui s'étend du palier articulé (58) vers l'extérieur dans la position des outils (54), occupée lorsque l'arbre (60) tourne, et une partie proximale (72) qui s'étend du palier articulé vers l'intérieur dans la position des outils (54), occupée lorsque l'arbre (60) tourne, et dans lequel les zones qui coopèrent sont prévues au niveau des parties proximales (70, 72), **caractérisé en ce que** les zones qui coopèrent comprennent un crochet (84) qui coopère avec la partie proximale (72) de l'autre outil (54) respectivement, et **en ce que** le crochet (84) s'applique respectivement contre une surface de l'autre outil (54) qui se trouve entre l'extrémité intérieure de la partie proximale (72) et le palier articulé (58).

2. Broyeur (50) selon la revendication 1, dans lequel les outils (54) sont pourvus de lames et/ou de percuteurs (74) à l'extrémité extérieure de la zone distale (70).

3. Broyeur (50) selon l'une quelconque des revendications précédentes, dans lequel les deux outils (54) sont de construction identique et tournés l'un par rapport à l'autre sur 180° par rapport à un axe s'étendant transversalement à l'axe longitudinal de l'arbre.

4. Broyeur (50) selon l'une quelconque des revendications précédentes, dans lequel les paliers articulés (58) permettent en plus de la rotation des outils (54) autour de l'axe s'étendant en parallèle à l'axe de rotation de l'arbre (60) également un mouvement oscillant limité des outils autour d'un axe de rotation horizontal orienté de manière tangentielle à la direction de rotation du broyeur (50).

5. Tête de récolte (20) comprenant un broyeur (50) selon l'une quelconque des revendications précédentes.

6. Moissonneuse automotrice (10) comprenant une tête de récolte (20) selon la revendication 5.
